# EUROPEAN PATENT APPLICATION

(11) **EP 4 625 120 A1**
(43) Date of publication of application: **01.10.2025**
(21) Application number: 23894170.2
(22) Date of filing: 06.07.2023
(51) Int. Cl.: G06F 3/0338

(54) **POINTING DEVICE**

(30) Priority: 22.11.2022 JP 2022186565
(71) Applicant: Minebea Mitsumi Inc., Kitasaku-gun, Nagano 3890293 (JP)
(72) Inventor: MORI Masao, Kitasaku-gun, Nagano 389-0293 (JP); KASHINO Takashi, Kitasaku-gun, Nagano 389-0293 (JP)
(74) Representative: Winter, Brandl - Partnerschaft mbB
(86) International application number: PCT/JP2023/025082
(87) International publication number: WO 2024/111154

(57) **Abstract**

A pointing device (100) detecting at least an operation amount in a first direction and an operation amount in a second direction orthogonal to the first direction includes an operation part as a columnar flexure element (12) operated by an operator and extending from one end (12b) fixed to a base member (11, 20) in a third direction orthogonal to the first direction and orthogonal to the second direction, a first strain sensing part (SS) attached to the operation part and configured to detect a strain corresponding to the operation amount in the first direction, and a second strain sensing part (SS) attached to the operation part and configured to detect a strain corresponding to the operation amount in the second direction.

## Description

### Technical Field

The present invention relates to a pointing device.

### Background Art

A pointing device including a rod-shaped operation part is known as one type of an input device detecting an operation amount by an operator and inputting the operation amount to an electronic device (that is, an operation target) such as a notebook computer or a game machine. The pointing device usually has a rod-shaped operation part and a flexure part connected to the operation part, and detects an operation amount by the operator based on a strain generated in the flexure part when the operator operates the operation part.

Patent Document 1 discloses a pointing device including a stick operated by an operator, a flexible stick support part connected to a lower end part of the stick, and three protruding parts for fixing the flexible stick support part to a support member. In Patent Document 1, the flexible stick support part is a member having a circular shape in a plan view and functioning as a flexure element.

### Citation List

### Patent Literature

Patent Document 1: JP 5285001 B

### Summary of Invention

### Technical Problem

As electronic devices such as notebook computers and game machines become smaller, there is an increasing demand for a pointing device with a high freedom degree of design and capable of being efficiently arranged within the electronic device.

In response to this, an object of the present invention is to provide a pointing device having a high freedom degree of design.

### Solution to Problem

According to an aspect of the present invention, a pointing device detecting at least an operation amount in a first direction and an operation amount in a second direction orthogonal to the first direction is provided.

The pointing device includes:
an operation part as a columnar flexure element operated by an operator and extending from one end fixed to a base member in a third direction orthogonal to the first direction and orthogonal to the second direction;
a first strain sensing part attached to the operation part and configured to detect a strain corresponding to the operation amount in the first direction; and
a second strain sensing part attached to the operation part and configured to detect a strain corresponding to the operation amount in the second direction.

### Advantageous Effects of Invention

The pointing device of the present invention has a high freedom degree of design, allowing for adopting an appropriate design in accordance with a size of an available space at an attachment location.

### Brief Description of Drawings

FIG. 1 is an exploded perspective view of a pointing device according to an embodiment.
FIG. 2 is a perspective view of the pointing device according to the embodiment.
FIGS. 3(a) and 3(b) are perspective views of an operation part, a strain gauge attached to the operation part, and a flexible printed circuit board (FPC). FIG. 3(a) illustrates a state before the FPC is connected to the strain gauge, and the FPC is unfolded. FIG. 3(b) illustrates a state where the FPC is connected to the strain gauge, and the FPC is wound around the operation part. In FIG. 3(b), the strain gauge hidden under the FPC is depicted by a dotted line.
FIG. 4(a) is a plan view of the pointing device according to the embodiment. FIG. 4(b) is a cross-sectional view taken along line IVb-IVb in FIG. 4(a).
FIG. 5 is a cross-sectional view of a pointing device according to a modification taken along a plane orthogonal to an X direction and passing through a center of an operation part.
FIGS. 6(a), 6(b), and 6(c) are top views of an operation part according to a modification.
FIG. 7 is a perspective view of an operation part and a strain sensor attached to the operation part. The strain sensor is in an unfolded state before being attached to the operation part.

### Description of Embodiments

### Embodiments

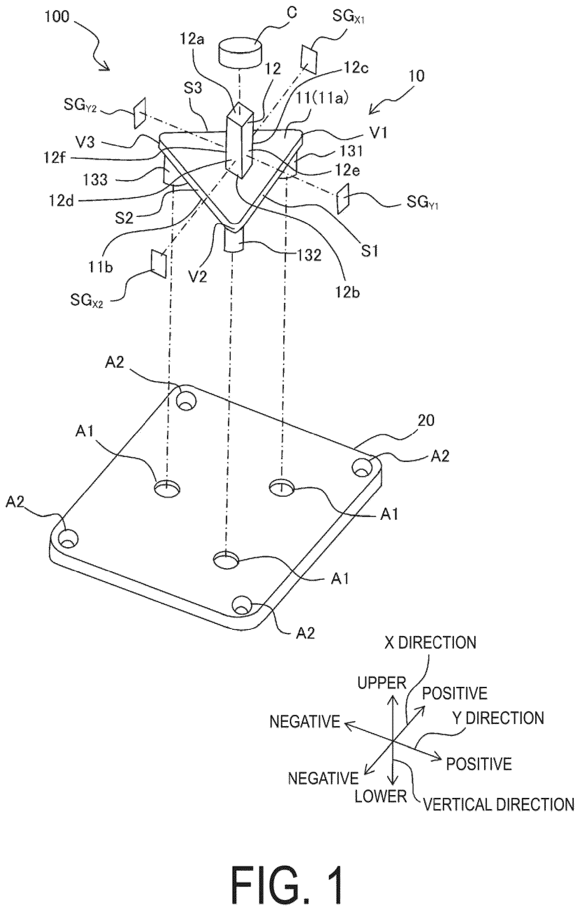

A pointing device 100 according to an embodiment of the present invention will be described with reference to FIG. 1 to FIG. 4(b).

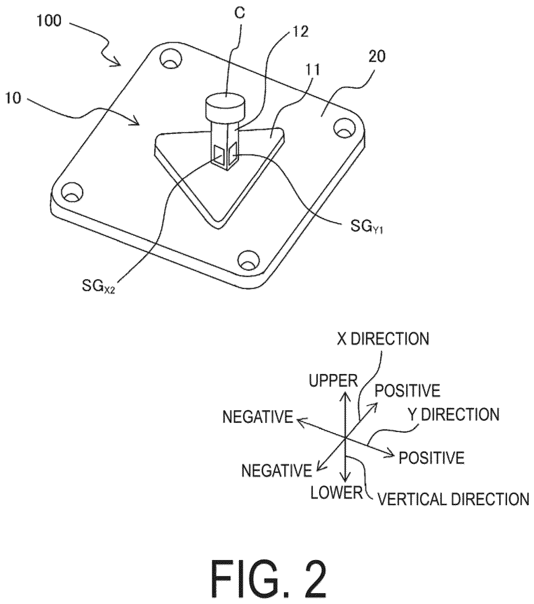

As illustrated in FIGS. 1 and 2, a pointing device 100 according to the present embodiment is a pointing stick assembly (PSA) including a columnar operation part 12. The pointing device 100 includes a main body 10, four strain gauges (i.e., strain gauges SG_{X1}, SG_{X2}, SG_{Y1}, and SG_{Y2}) for detecting strain generated in the main body 10, and a support plate 20 (an example of a base member) for supporting the main body 10. an example of a support).

In the following description, a direction of arranging the main body 10 and the support plate 20 is defined as a vertical direction. In the vertical direction, a side with the main body 10 positioned with respect to the support plate 20 is defined as an upper side, and a side with the support plate 20 positioned with respect to the main body 10 is defined as a lower side. One direction extending in a plane orthogonal to the vertical direction is defined as an X direction, and a direction extending in a plane orthogonal to the vertical direction and orthogonal to the X direction is defined as a Y direction. In the present embodiment, for convenience of description, as illustrated in FIG. 1, a direction of one side of the square support plate 20 is defined as the X direction, and a direction of the other side orthogonal to the one side is defined as the Y direction. In the present embodiment, for convenience of description, the positive side and the negative side of the X direction and the Y direction are defined as illustrated in FIG. 1. However, the X direction and the Y direction are not limited to the example of FIG. 1. The X direction, the Y direction, and the vertical direction are examples of a first direction, a second direction, and a third direction in the present invention, respectively.

The main body 10 is formed of, for example, a resin. The main body 10 may be formed by integral molding.

The main body 10 includes a base plate 11 (an example of a base member), the operation part 12, and three legs (i.e., a first leg 131, a second leg 132, and a third leg 133).

The base plate 11 is a substantially flat plate extending in a plane including the X direction and the Y direction. The base plate 11 has a triangular shape in a plan view (i.e., when viewed in the vertical direction), and has a first top part V1, a second top part V2, and a third top part V3, and a first side S1, a second side S2, and a third side S3. In the present embodiment, the first top part V1, the second top part V2, and the third top part V3 are rounded in a plan view, but are not limited to this shape.

The first top part V1 and the second top part V2 are arranged in the X direction. The first side S1 extends parallel to the X direction. A perpendicular line from the third top part V3 to the first side S1 extends parallel to the Y direction. In the present embodiment, lengths of the second side S2 and the third side S3 are equal to each other, and the first side S1 is longer than the second side S2 and the third side S3. That is, the shape of the flexure element 11 in a plan view is an isosceles triangle.

The operation part 12 is a part operated by a user of the pointing device 100 (i.e., a part for receiving force applied by the user). The operation part 12 is provided on an upper surface 11a of the base plate 11.

The operation part 12 is a prism extending in the vertical direction. The operation part 12 has an upper surface 12a, a lower surface 12b, and four side surfaces 12c, 12d, 12e, and 12f.

A cap C is attached to an upper end part (i.e., the upper surface 12a) of the operation part 12. The cap C is a part directly touched by the operator of the pointing device 100 in order to operate the pointing device 100. The cap C may be made of rubber, for example.

The lower surface 12b of the operation part 12 is fixed to the upper surface 11a of the base plate 11. A connection position of the operation part 12 to the base plate 11 is not particularly limited. For example, the operation part 12 may be fixed to a position of the center of gravity of the base plate 11.

The side surface 12c faces the X direction positive side, and the side surface 12d faces the X direction negative side. Each of the side surfaces 12c and 12d is a plane disposed orthogonal to the axes extending in the X direction (in other words, a plane arranged parallel to a plane including the vertical direction and the Y direction). The side surface 12e faces the Y direction positive side, and the side surface 12f faces the Y direction negative side. Each of the side surfaces 12e and 12f is a plane arranged orthogonal to the axes extending in the Y direction (in other words, a plane arranged parallel to a plane including the vertical direction and the X direction). The orientations of the four side surfaces 12c to 12f of the operation part 12 are not limited to the above-described orientations. For example, each of the four side surfaces 12c to 12f may face a direction inclined by 45 degrees from the above-described direction in a plan view (that is, in the XY plane).

Each of the first leg 131, the second leg 132, and the third leg 133 is a support leg fixed to the support plate 20 and supporting the base plate 11. The first leg 131 is provided at the first top part V1 of the base plate 11, the second leg 132 is provided at the second top part V2 of the base plate 11, and the third leg 133 is provided at the third top part V3 of the base plate 11.

The first leg 131 and the second leg 132 are located at the same position in the Y direction. That is, the first leg 131 and the second leg 132 are aligned in the X direction. The third leg 133 is located at a center position between the first leg 131 and the second leg 132 in the X direction. That is, a distance between the first leg 131 and the third leg 133 in the X direction is equal to a distance between the second leg 132 and the third leg 133 in the X direction. The third leg 133 is located at the negative side of the first leg 131 and the second leg 132 in the Y direction.

Each of the first leg 131, the second leg 132, and the third leg 133 is a cylindrical leg extending downward from the lower surface 11b of the base plate 11. In the present embodiment, upper surfaces of the first leg 131, the second leg 132, and the third leg 133 are formed integrally with the lower surface 11b of the base plate 11. The first leg 131 to the third leg 133 may be formed separately from the base plate 11 and then fixed to the base plate 11 with an adhesive or the like.

The strain gauges SG_{X1}, SG_{X2}, SG_{Y1}, and SG_{Y2} are attached to the side surfaces 12c, 12d, 12e, and 12f of the operation part 12 with an adhesive or the like. Specifically, the strain gauge SG_{X1} is attached to the side surface 12c, the strain gauge SG_{X2} is attached to the side surface 12d, the strain gauge SG_{Y1} is attached to the side surface 12e, and the strain gauge SG_{Y2} is attached to the side surface 12f.

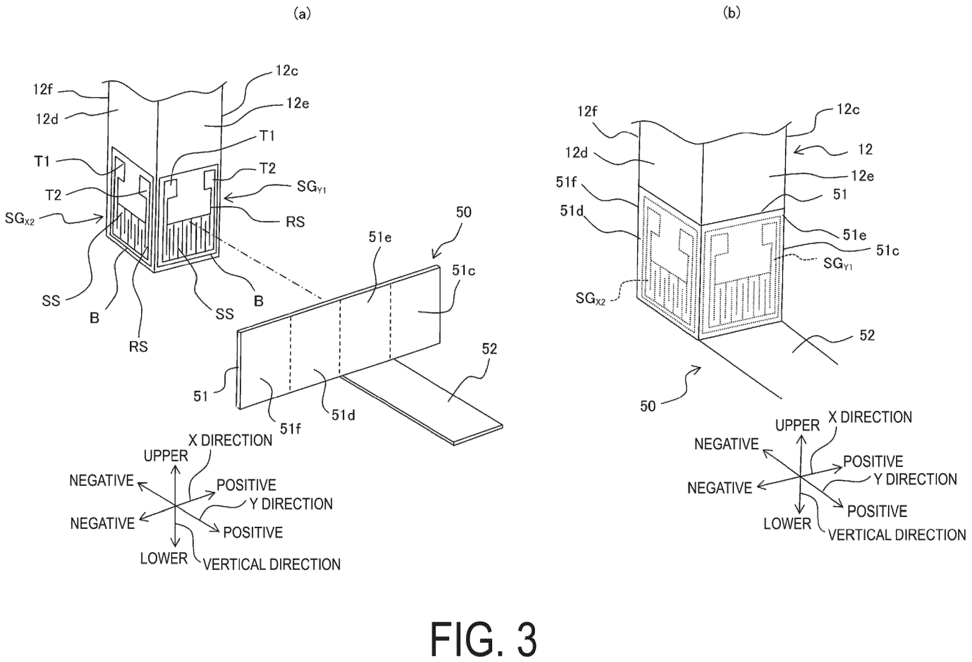

The strain gauges SG_{X1}, SG_{X2}, SG_{Y1}, and SG_{Y2} may have the same configuration or may have different configurations. In the present embodiment, as an example, the strain gauges SG_{X1}, SG_{X2}, SG_{Y1}, and SG_{Y2} are assumed to have the same configuration. In the following, the configuration of the strain gauge SG_{Y1} will be described as a representative. As illustrated in FIG. 3(a), the strain gauges SG_{Y1} includes a base material B formed of a resin film or the like, and a resistor RS made of a metal and provided on the base material B.

The resistor RS includes a strain sensing part SS and a pair of tabs T1 and T2 for connecting the strain sensing part SS to an external.

In the strain sensing part SS, the resistor RS having a linear shape is folded back in a zigzag manner to form a predetermined pattern. In the following description, an extending direction of each of linear parts defined between turning points is referred to as a grid direction (strain sensing direction), and an arrangement direction of the linear parts is referred to as a grid width direction. The grid direction and the grid width direction are orthogonal to each other. Each strain gauge is configured to detect a strain generated in the grid direction.

The strain gauge SG_{X1} is attached to the operation part 12 with the strain sensing part SS positioned below the tabs T1 and T2 so that the strain sensing part SS is located near the lower end part of the side surface 12c of the operation part 12. The strain gauge SG_{X2} is attached to the operation part 12 with the strain sensing part SS positioned below the tabs T1 and T2 so that the strain sensing part SS is located near the lower end part of the side surface 12d of the operation part 12. In the pointing device 100 according to the present embodiment, when the operation part 12 is not operated, the grid directions of the strain gauges SG_{X1} and SG_{X2} are parallel to the vertical direction, and the grid width directions of the strain gauges SG_{X1} and SG_{X2} are parallel to the Y direction.

The strain gauge SG_{Y1} is attached to the operation part 12 with the strain sensing part SS positioned below the tabs T1 and T2 so that the strain sensing part SS is located near the lower end part of the side surface 12e of the operation part 12. The strain gauge SG_{Y2} is attached to the operation part 12 with the strain sensing part SS positioned below the tabs T1 and T2 so that the strain sensing part SS is located near the lower end part of the side surface 12f of the operation part 12. In the pointing device 100 according to the present embodiment, when the operation part 12 is not operated, the grid directions of the strain gauges SG_{Y1} and SG_{Y2} are parallel to the vertical direction, and the grid width directions of the strain gauges SG_{Y1} and SG_{Y2} are parallel to the X direction.

From the perspective of detection accuracy, each strain gauge is preferably disposed so that the strain sensing part SS is as close as possible to the lower end part of the operation part 12. However, the position of each strain gauge is not limited to the above-described position. For example, each strain gauge (and the position of the strain sensing part SS) may be appropriately determined in accordance with detection accuracy required for each strain gauge, a size of an attachment space of the pointing device 100, a positional relationship with other components, and the like. For example, the strain sensing part SS of each strain gauge may be disposed in a region within 50% of an entire length in a longitudinal direction of the operation part from the lower end part (one end) of the operation part. Additionally, for example, the strain sensing part SS of each strain gauge may be disposed in a region within 25% of an entire length in a longitudinal direction of the operation part from the lower end part (one end) of the operation part. In the present specification and the present invention, "the strain sensing part is attached to a predetermined region of the operation part" may mean that at least a part of the strain sensing part is attached to the operation part so as to be located in the predetermined region, or may mean that the entire strain sensing part is attached to the operation part so as to be located in the predetermined region.

The support plate 20 is a member for supporting the main body 10, and is a member for attaching the pointing device 100 to an attachment target device (a personal computer, a game machine, or the like). The support plate 20 may be formed of, for example, a metal (as an example, stainless steel).

The support plate 20 is a substantially flat plate extending in a plane including the X direction and the Y direction. In the present embodiment, the support plate 20 has a square shape in a plan view. However, the shape of the support plate 20 is not limited to this shape, and may be appropriately changed in accordance with the specification, shape, and the like of the attachment target. For example, the support plate 20 may have various shapes such as a rectangular shape, a circular shape, or an elliptical shape in a plan view.

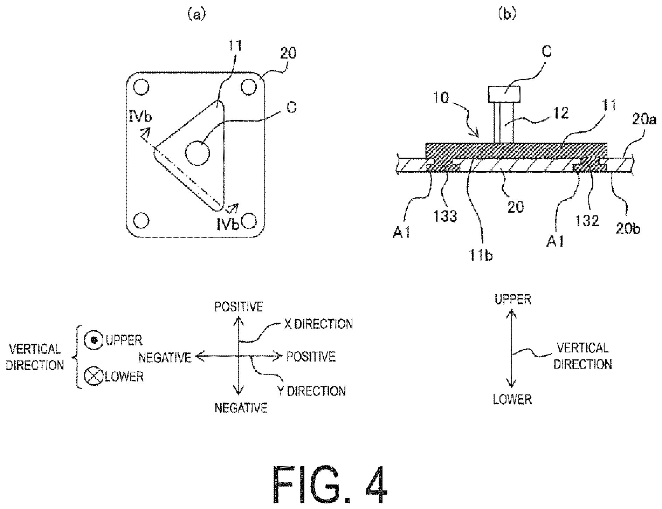

As illustrated in FIG. 1, three openings A1 are provided in a substantially central part of the support plate 20. Each of the three openings A1 is an opening for fixing the main body 10. Each of the three openings A1 has a circular shape in a plan view. Each of the three openings A1 is a stepped hole, with a diameter near a lower surface 20b being larger than a diameter near an upper surface 20a (FIG. 4(b)).

In the present embodiment, as an example, as illustrated in FIG. 1, an opening A2 is provided at each of four corners of the support plate 20. The number of openings A2 is not limited. Each of the four openings A2 is an opening for attaching the support plate 20 (and further the pointing device 100) to a device as an attachment target (i.e., an attachment target device). In the present embodiment, the four openings A2 have a circular shape in a plan view. However, each of the openings A1 and A2 may have a shape of a screw hole for receiving a screw part.

As illustrated in FIGS. 2 and 4(b), the main body 10 is fixed to the support plate 20. Specifically, each of the first leg 131, the second leg 132, and the third leg 133 of the main body 10 is inserted, welded, and fixed in the opening A1 of the support plate 20 (FIG. 4(b)). The lower end parts of the first leg 131, the second leg 132, and the third leg 133 are deformed by welding and fill the inside of the openings A1 without protruding downward from the lower surface 20b of the support 20.

In a state where the main body 10 is fixed to the support plate 20, the lower surface 11b of the base plate 11 is in contact with the upper surface 20a of the support plate 20.

The pointing device 100 is fixed to a housing, a substrate, or the like of an attachment target device of the pointing device 100 by screwing or the like through the openings A2 of the support plate 20.

The strain gauges SG_{X1}, SG_{X2}, SG_{Y1}, and SG_{Y2} are connected to the external via a flexible printed circuit board (hereinafter referred to as FPC) 50. As illustrated in FIG. 3(a), the FPC 50 includes a rectangular gauge connection region 51 and an external connection region 52 connected to one long side of the connection region 51. The gauge connection region 51 is divided into four regions 51c, 51d, 51e, and 51f along the long side direction of the gauge connection region 51.

The FPC 50 is connected to the strain gauges SG_{X1}, SG_{X2}, SG_{Y1}, and SG_{Y2} by winding the gauge connection region 51 around the operation part 12. In the state where the FPC 50 is wound around the operation part 12 (FIG. 3(b)), the region 51c is in contact with the side surface 12c of the operation part 12 and connected to the strain gauge SG_{X1}, the region 51d is in contact with the side surface 12d of the operation part 12 and connected to the strain gauge SG_{X2}, the region 51e is in contact with the side surface 12e of the operation part 12 and connected to the strain gauge SG_{Y1}, and the region 51f is in contact with the side surface 12f of the operation part 12 and connected to the strain gauge SG_{Y2}.

The external connection region 52 of the FPC 50 is in contact with the upper surface 11a of the base plate 11, extends in a plane orthogonal to the vertical direction, and is connected to an electrical configuration of an attachment target device. This configures, for example, a Wheatstone bridge including the strain gauges SG_{X1} and SG_{X2} and a resistor outside the pointing device 100 and a Wheatstone bridge including the strain gauges SG_{Y1} and SG_{Y2} and a resistor outside the pointing device 100. The FPC 50 may be regarded as a part of the pointing device 100.

When the operator operates the operation part 12 via the cap C (that is, when the operator applies a load to the operation part 12), a strain corresponding to the magnitude and direction of the load applied to the operation part 12 by the operator is generated in the operation part 12.

For example, it is assumed that the operator operates the operation part 12 in the X direction (that is, the operator applies a load along the X direction to the cap C). As described above, the lower end part of the operation part 12 is fixed to the base plate 11. Therefore, the operation part 12 substantially perpendicular to the vertical direction is curved in the X direction by the above-described operation. Alternatively, the upper surface 12a of the operation part 12 is shifted to one side in the X direction with respect to the lower surface 12b. This generates tensile strain in one of the side surfaces 12c and 12d of the operation part 12 and compressive strain in the other side.

Similarly, when the operator operates the operation part 12 in the Y direction (that is, when the operator applies a load along the Y direction to the cap C), the operation part 12 substantially perpendicular to the vertical direction is curved in the Y direction. Alternatively, the upper surface 12a of the operation part 12 is shifted to one side in the Y direction with respect to the lower surface 12b. This generates tensile strain in one of the side surfaces 12e and 12f of the operation part 12 and compressive strain in the other side. The operation part 12 may be operable not only in the X direction and the Y direction but also in any direction of 360 degrees on the XY plane.

The pointing device 100 detects the magnitude of the strain generated in the operation part 12 by the strain gauges SG_{X1}, SG_{X2}, SG_{Y1}, and SG_{Y2} to obtain an operation amount input by the user. Specifically, an operation amount in the X direction is obtained using the Wheatstone bridge including the strain gauges SG_{X1} and SG_{X2}, and an operation amount in the Y direction is obtained using the Wheatstone bridge including the strain gauges SG_{Y1} and SG_{Y2}. The pointing device 100 inputs the obtained operation amount to a device with the pointing device 100 mounted thereon (that is, an attachment target device). The pointing device 100 may combine components in the X direction and the Y direction to calculate an operation amount in a direction obtained by combining the components in the X direction and the Y direction (that is, any direction of 360 degrees on the XY plane), and input the operation amount to the attachment target device. When the side surfaces 12c to 12f of the operation part 12 are disposed at an inclination of a predetermined angle (for example, 45 degrees) from the detection direction of the operation amount (the X direction and the Y direction in the present embodiment) in a plan view, the pointing device 100 may obtain the operation amount with respect to the detection direction by integrating the detection values of the strain gauges SG_{X1}, SG_{X2}, SG_{Y1}, and SG_{Y2}.

The advantageous effects of the pointing device 100 of the present embodiment are summarized below.

In the pointing device 100 of the present embodiment, the strain gauges SG_{X1}, SG_{X2}, SG_{Y1}, and SG_{Y2} are attached to the operation part 12. In other words, the operation part 12 is used as a flexure part, with strain being generated by the operation of the operator. Therefore, a plate-shaped flexure part provided in a pointing device of the related art as disclosed in Patent Document 1 is not required, and the freedom degree of design is high.

The improvement in a freedom degree of design is particularly advantageous when attaching the pointing device 100 to another device. For example, an attachment target device of the pointing device 100, such as a notebook computer or a game machine, is required to be reduced in size, and a space capable of being used for installing the pointing device 100 inside the device is limited. In this regard, the high freedom degree of design of the pointing device 100 allows the pointing device 100 to have a shape corresponding to the internal space of the attachment target device of the pointing device 100. For example, the pointing device 100 can be installed compactly and efficiently. Therefore, according to the present embodiment, it is possible to adopt an appropriate design for the pointing device 100 in accordance with a size of an available space at an attachment location.

In the pointing device 100 according to the present embodiment, the strain gauges SG_{X1}, SG_{X2}, SG_{Y1}, and SG_{Y2} are attached to the operation part 12 so that the strain sensing parts SS are located near the lower end part of the operation part 12. Each of the strain gauges SG_{X1}, SG_{X2}, SG_{Y1}, and SG_{Y2} is attached to the operation part 12 so that the strain sensing part SS is located below the tabs T1 and T2 (that is, so that the strain sensing part SS is located between the tabs T1 and T2 and the lower surface 12b in the vertical direction). When the operator applies a load to the vicinity of the upper surface 12a of the operation part 12, the amount of strain becomes largest near the lower surface 12b of the operation part 12. Therefore, by arranging the strain gauges SG_{X1}, SG_{X2}, SG_{Y1}, and SG_{Y2} near the lower surface 12b as described above, the outputs of the strain gauges SG_{X1}, SG_{X2}, SG_{Y1}, and SG _{Y2} can be increased, and the strain detection accuracy can be improved.

In the pointing device 100 according to the present embodiment, the lower end part of the operation part 12 is connected to the plate-shaped base plate 11, and the base plate 11 is fixed to the support plate 20 using the three legs 131, 132, and 133, thereby fixing the operation part 12 to the support plate 20. In this way, by fixing the operation part 12 to the support plate 20 at a plurality of locations using the base plate 11, rattling of the operation part 12 due to deterioration of the fixed (welded) locations or the like can be suppressed, and the operation part 12 can be supported in a more stable state.

The pointing device 100 of the present embodiment supports the base plate 11 having a triangular shape in a plan view by using the first legs 131, the second legs 132, and the third legs 133 respectively provided at the three top parts V1, V2, and V3 of the base plate 11. Therefore, the base plate 11 has a small region located outside a contour defined by connecting the first leg 131, the second leg 132, and the third leg 133, and is compact and space-efficient.

### Modifications

In the pointing device 100 of the embodiment described above, the following modified aspects can also be used.

In the pointing device 100 according to the embodiment described above, the shape of the base plate 11 in a plan view is an isosceles triangle, but is not limited to this shape. The shape of the base plate 11 in a plan view may be any triangle such as an equilateral triangle or a right triangle. In addition, the base plate 11 may have any shape such as a quadrangular shape or a circular shape.

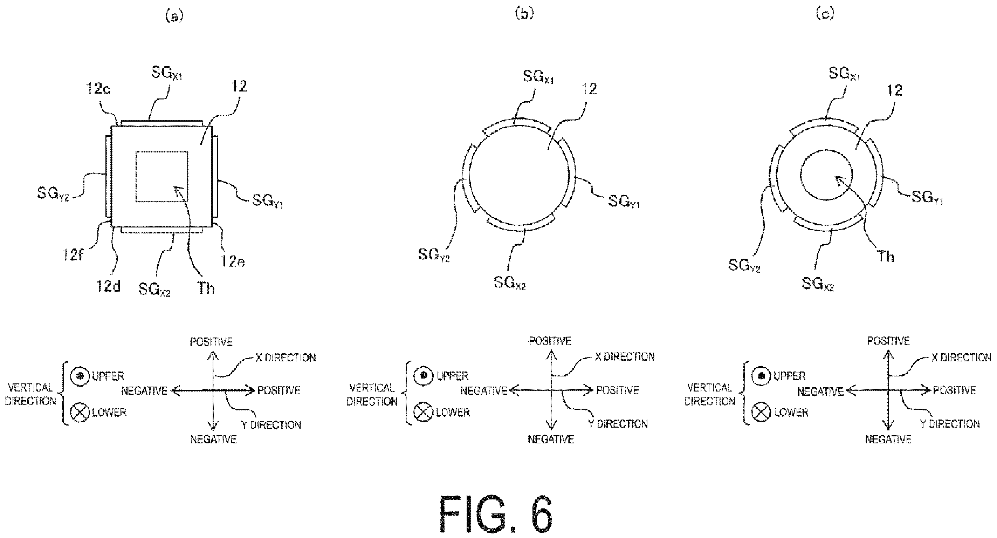

In the pointing device 100 of the embodiment described above, the operation part 12 is a quadrangular prism. However, the shape of the operation part 12 is not limited to this shape. The operation part 12 may have any shape such as a quadrangular tube (FIG. 6(a)), a column (FIG. 6(b)), or a cylinder (FIG. 6(c)). For example, by forming the operation part 12 into a hollow tubular shape having a center hole Th extending in an axial direction, the amount of strain generated on an outer surface of the operation part 12 can be increased. According to such a configuration, since the outputs of the strain gauges SG_{X1}, SG_{X2}, SG_{Y1}, and SG_{Y2} can be increased, the strain detection accuracy can be improved.

For example, when the operation part 12 is a quadrangular tube (FIG. 6(a)), the four strain gauges SG_{X1}, SG_{X2}, SG_{Y1}, and SG_{Y2} can be attached to the four side surfaces 12c, 12d, 12e, and 12f in the same manner as in the embodiment described above.

In addition, for example, when the operation part 12 is a column (FIG. 6(b)), the four strain gauges SG_{X1}, SG_{X2}, SG_{Y1}, and SG_{Y2} are attached to an outer peripheral surface of the operation part 12 so that the grid directions of the strain gauges coincide with the vertical direction and the grid width directions of the strain sensing parts SS of the strain gauges coincide with the peripheral direction of the operation part 12. In this case, the four strain gauges SG_{X1}, SG_{X2}, SG_{Y1}, and SG_{Y2} may be disposed at equal intervals in the peripheral direction of the operation part 12. In the operation part 12 having a columnar shape, a center in the grid width direction of the strain sensing part SS of the strain gauge SG_{X1} may be disposed at a position at the most positive side in the X direction at the outer peripheral surface of the operation part 12. In the operation part 12 having a columnar shape, a center in the grid width direction of the strain sensing part SS of the strain gauge SG_{X2} may be disposed at a position at the most negative side in the X direction at the outer peripheral surface of the operation part 12. In the operation part 12 having a columnar shape, a center in the grid width direction of the strain sensing part SS of the strain gauge SG_{Y1} may be disposed at a position at the most positive side in the Y direction at the outer peripheral surface of the operation part 12. In the operation part 12 having a columnar shape, a center in the grid width direction of the strain sensing part SS of the strain gauge SG_{Y2} may be disposed at a position at the most negative side in the Y direction at the outer peripheral surface of the operation part 12.

When the operation part 12 is a cylinder (FIG. 6(c)), the four strain gauges SG_{X1}, SG_{X2}, SG_{Y1}, and SG_{Y2} can be attached to the outer peripheral surface of the operation part 12 in the same manner as when the operation part 12 is a column (FIG. 6(b)).

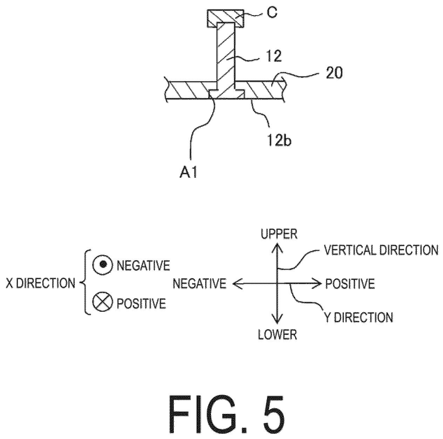

In the pointing device 100 of the embodiment described above, the base plate 11 and the legs 131, 132, and 133 may be omitted. In this case, for example, only one opening A1 is provided at the center of the support plate 20 in a plan view. Then, a region near the lower surface 12b of the operation part 12 is inserted into the opening A1, and the lower end part of the operation part 12 is directly fixed (welded) to the support plate 20 (FIG. 5). By omitting the base plate 11 and the legs 131, 132, and 133, the pointing device 100 can be further miniaturized.

In the pointing device 100 of the embodiment described above, the first leg 131, the second leg 132, and the third leg 133 are columns. However, no such limitation is intended. The first leg 131, the second leg 132, and the third leg 133 may have any shape such as a cylindrical shape, a quadrangular prism shape, or a triangular prism shape.

In the pointing device 100 of the embodiment described above, the strain gauges SG_{X1}, SG_{X2}, SG_{Y1}, and SG_{Y2} are attached to the operation part 12 so that the strain sensing parts SS are located near the lower end part of the operation part 12. However, no such limitation is intended. The strain gauges SG_{X1}, SG_{X2}, SG_{Y1}, and SG_{Y2} and the strain sensing parts SS with respect to the operation part 12 are freely disposed. However, by arranging the strain sensing part SS at a position closer to the lower surface 12b (lower end part) of the operation part 12, the strain detection accuracy can be improved.

Specifically, the strain gauges SG_{X1}, SG_{X2}, SG_{Y1}, and SG_{Y2} may be attached to the operation part 12 so that the strain sensing parts SS are located between the central part and the lower surface 12b of the operation part 12 in the vertical direction. Alternatively, the strain gauges SG_{X1}, SG_{X2}, SG_{Y1}, and SG_{Y2} may be attached to the operation part 12 so that the strain sensing parts SS are in contact with the lower end part of the operation part 12.

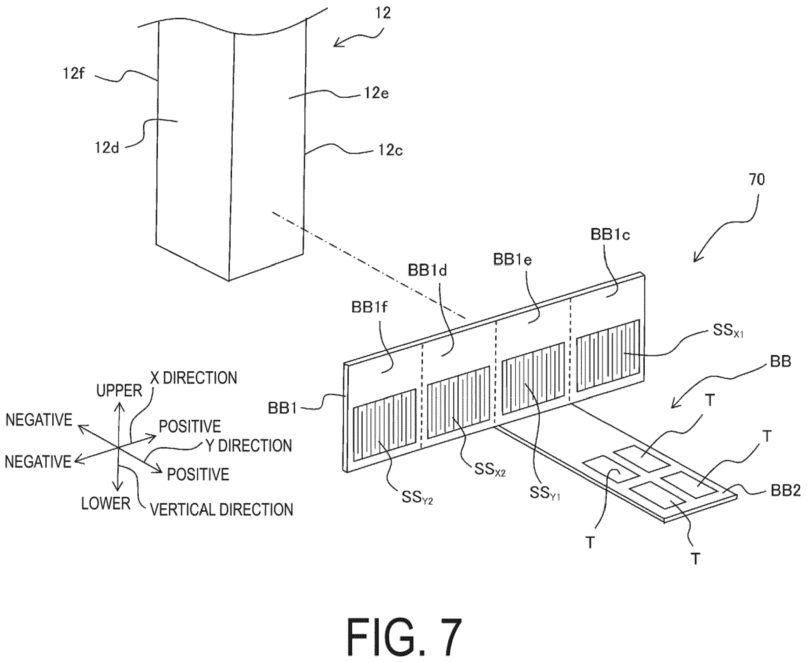

In the pointing device 100 of the embodiment described above, the four strain gauges SG_{X1}, SG_{X2}, SG_{Y1}, and SG_{Y2} separated from each other are individually attached to the operation part 12. However, no such limitation is intended. Specifically, for example, a strain sensor 70 as illustrated in FIG. 7 may be used instead of the four strain gauges SG_{X1}, SG_{X2}, SG_{Y1}, and SG_{Y2}.

The strain sensor 70 includes a base material BB having flexibility, four strain sensing parts SS_{X1}, SS_{X2}, SS_{Y1}, and SS_{Y2} formed at the base material BB, and four tabs T.

The base material BB includes a sensing part forming region BB1 having a rectangular shape and an external connection region BB2 connected to one long side of the sensing part forming region BB1. The sensing part forming region BB1 is divided into four regions BB1c, BB1d, BB1e, and BB1f along the long side direction of the sensing part forming region BB1.

The strain sensing part SS_{X1} is formed in the region BB1c, the strain sensing part SS_{X2} is formed in the region BB1d, the strain sensing part SS_{Y1} is formed in the region BB1e, and the strain sensing part SS_{Y2} is formed in the region BB1f. The strain sensing parts SS_{X1}, SS_{X2}, SS_{Y1}, and SS_{Y2} have the same configurations as the strain sensing parts SS of the strain gauges SG_{X1}, SG_{X2}, SG_{Y1}, and SG_{Y2}, respectively. Each of the strain sensing parts SS_{X1}, SS_{X2}, SS_{Y1}, and SS_{Y2} is formed so that the grid direction coincides with the short side direction of the sensing part forming region BB1 and the grid width direction coincides with the long side direction of the sensing part forming region BB1.

Four tabs T are formed in the external connection region BB2. The four tabs T are connected to the strain sensing parts SS_{X1}, SS_{X2}, SS_{Y1}, and SS_{Y2} by wiring (not illustrated) formed at the base material BB. The shape of the tab T is not limited to the illustrated shape. For example, the tab T may have a circular or elliptical shape.

The strain sensor 70 is attached to the operation part 12 by winding the sensing part forming region BB1 around the operation part 12. In a state where the sensing part forming region BB1 is wound around the operation part 12, the region BB1c is in contact with the side surface 12c of the operation part 12, the region BB1d is in contact with the side surface 12d of the operation part 12, the region BB1e is in contact with the side surface 12e of the operation part 12, and the region BB1f is in contact with the side surface 12f of the operation part 12.

In a state where the sensing part forming region BB1 is wound around the operation part 12, each of the strain sensing parts SS_{X1}, SS_{X2}, SS_{Y1}, and SS_{Y2} is located near the lower end part of the operation part 12. The grid directions of the strain sensing parts SS_{X1} and SS_{X2} are parallel to the vertical direction, and the grid width directions of the strain sensing parts SS_{X1} and SS_{X2} are parallel to the Y direction. The grid directions of the strain sensing parts SS_{Y1} and SS_{Y2} are parallel to the vertical direction, and the grid width directions of the strain sensing parts SS_{Y1} and SS_{Y2} are parallel to the X direction.

The external connection region BB2 of the strain sensor 70 is in contact with the upper surface 11a of the base plate 11 and extends in a plane orthogonal to the vertical direction. The tab T in the external connection region BB2 is connected to an electrical configuration of an operation target via a flexible printed circuit board (FPC) or the like. This configures, for example, a Wheatstone bridge including the strain sensing parts SS_{X1} and SS_{X2} and a resistor outside the pointing device 100 and a Wheatstone bridge including the strain sensing parts SS_{Y1} and SS_{Y2} and a resistor outside the pointing device 100.

In the pointing device 100 of the embodiment described above, the support plate 20 may be omitted. In this case, the first leg 131 to the third leg 133 of the main body 10 or the lower end part of the operation part 12 of the main body 10 is fixed to a part of an attachment target device of the pointing device 100 (for example, a substrate embedded in the attachment target device). In this case, the part of the attachment target device corresponds to the "support" or the "base member" of the present invention.

As long as the features of the present invention are maintained, the present invention is not limited to the embodiment described above, and other forms considered within the scope of the technical concept of the present invention are also included within the scope of the present invention.

### Reference Signs List

10: main body, 11: base plate, 12: operation part, 131: first leg, 132: second leg, 133: third leg, 20: support plate, 60: flexible printed circuit board (FPC), 70: strain sensor, 100: pointing device, A1, A2: opening, SG_{X1}, SG_{X2}, SG_{Y1}, SG_{Y2}: strain gauge, SS_{X1}, SS_{X2}, SS_{Y1}, SS_{Y2}: strain sensing part

## Claims

1. A pointing device detecting at least an operation amount in a first direction and an operation amount in a second direction orthogonal to the first direction, the pointing device comprising:
an operation part as a columnar flexure element operated by an operator and extending from one end fixed to a base member in a third direction orthogonal to the first direction and orthogonal to the second direction;
a first strain sensing part attached to the operation part and configured to detect a strain corresponding to the operation amount in the first direction; and
a second strain sensing part attached to the operation part and configured to detect a strain corresponding to the operation amount in the second direction.

2. The pointing device according to claim 1, wherein the first strain sensing part and the second strain sensing part are attached between a central part of the operation part in the third direction and the one end.

3. The pointing device according to claim 2, wherein the first strain sensing part and the second strain sensing part are attached near the one end of the operation part.

4. The pointing device according to any one of claims 1 to 3, comprising
a first strain gauge and a second strain gauge, wherein
the first strain gauge comprises
a first base material comprising the first strain sensing part and
a first tab formed at the first base material and connected to the first strain sensing part by wiring,
the second strain gauge comprises
a second base material comprising the second strain sensing part and
a second tab formed at the second base material and connected to the second strain sensing part by wiring,
the first strain gauge is attached to the operation part so that the first strain sensing part is disposed between the first tab and the one end in the third direction, and
the second strain gauge is attached to the operation part so that the second strain sensing part is disposed between the second tab and the one end in the third direction.

5. The pointing device according to any one of claims 1 to 4, further comprising
a flexible substrate connecting the first strain sensing part and the second strain sensing part to an external, wherein
the flexible substrate comprises a sensing part connection region wound around the operation part and connected to the first strain sensing part and the second strain sensing part and an external connection region extending along a plane including the first direction and the second direction and connected to the external.

6. The pointing device according to any one of claims 1 to 3, comprising
a strain sensor, wherein
the strain sensor comprises
a base material comprising a sensing part forming region and a tab forming region and
a tab,
the first strain sensing part and the second strain sensing part are formed in the sensing part forming region,
the tab is formed in the tab forming region and is connected to the first strain sensing part and the second strain sensing part by wiring,
the sensing part forming region is wound around the operation part so that the first strain sensing part and the second strain sensing part are attached to the operation part, and
the tab forming region extends along a plane including the first direction and the second direction.

7. The pointing device according to any one of claims 1 to 6, wherein the operation part comprises a center hole extending in the third direction and has a tubular shape.

8. The pointing device according to any one of claims 1 to 7, wherein
the base member is a base plate extending in a plane including the first direction and the second direction and has a plate shape, the one end of the operation part being fixed to the base plate,
the base plate comprises a plurality of legs extending in the third direction from the base plate and fixed to a support supporting the base plate,
the operation part extends from the base plate to one side in the third direction, and
each of the plurality of legs extends from the base plate to the other side in the third direction.

9. The pointing device according to claim 8, wherein
the base plate has a triangular shape when viewed in the third direction, and
the plurality of legs are three legs provided at respective three corners of the base plate.

10. The pointing device according to any one of claims 1 to 7, wherein the base member is a support plate to be attached to an attachment target device of the pointing device, the one end of the operation part being fixed to the support plate.

11. The pointing device according to claim 8 or 9, wherein the support is a support plate to be attached to an attachment target device of the pointing device, the plurality of legs being fixed to the support plate.
